(19) Europäisches Patentamt
European Patent Office
Office européen des brevets

(11) **EP 4 010 666 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **20788774.6**

(22) Anmeldetag: **07.10.2020**

(51) Internationale Patentklassifikation (IPC):
**G01G 19/56** *(2006.01)*

(52) Gemeinsame Patentklassifikation (CPC):
**G01G 19/56**

(86) Internationale Anmeldenummer:
**PCT/EP2020/078143**

(87) Internationale Veröffentlichungsnummer:
**WO 2021/073982 (22.04.2021 Gazette 2021/16)**

(54) **WÄGEVORRICHTUNG MIT SPEKTRALANALYSE**

WEIGHING DEVICE WITH SPECTRAL ANALYSIS

DISPOSITIF DE PESAGE AVEC ANALYSE SPECTRALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2019   CH 13112019**

(43) Veröffentlichungstag der Anmeldung:
**15.06.2022   Patentblatt 2022/24**

(73) Patentinhaber: **V-Zug AG**
**6300 Zug (CH)**

(72) Erfinder:
• **HERLITZIUS, Clemens**
**8834 Schindellegi (CH)**
• **PINK, Edwin, Brian**
**6340 Baar (CH)**
• **MEIENBERG, Hilmar**
**6340 Baar (CH)**

(74) Vertreter: **E. Blum & Co. AG**
**Franklinturm**
**Hofwiesenstrasse 349**
**8050 Zürich (CH)**

(56) Entgegenhaltungen:
**DE-A1- 102014 111 193     JP-A- H0 354 432**

**Beschreibung**

Gebiet der Erfindung

Die Erfindung betrifft eine Wägevorrichtung, insbesondere für Küchen, und ein Kochfeld oder ein Möbel, insbesondere ein Küchenmöbel, mit einer derartigen Wägevorrichtung gemäss Oberbegriff der Hauptansprüche. Die Erfindung bezieht sich auch auf ein Verfahren zum Betrieb einer solchen Wägevorrichtung sowie auf ein Messgerät für eine derartige Wägevorrichtung bzw. zum Durchführen des vorliegenden Verfahrens.

Hintergrund

Es sind Waagen unterschiedlichster Bauart bekannt, welche z.B. mittels Dehnungsmessstreifen, oder mit kapazitiven oder optischen Sensoren die elastische Verformung der Halterung einer Auflageplatte messen.
WO 02/26002 beschreibt ein Kochfeld mit einer eingebauten Waage, wobei das Gewicht des zu messenden Gegenstands durch Detektion der statischen Deformation der Auflageplatte des Kochfelds ermittelt wird. Hierzu sind geeignete Detektoren in der Mitte unterhalb der Auflageplatte erforderlich. Diese müssen in der Lage sein, Verformungen präzis zu messen, was schwierig ist, da absolute Positionen ohne geeignete Referenzposition ermittelt werden müssen.
DE 102014111193A1 beschreibt eine Küchenmaschine mit einem Gefäss, das zu Schwingungen angeregt wird. Aus der Resonanzfrequenz wird auf das Gewicht des Eingabeguts geschlossen.

Darstellung der Erfindung

Es stellt sich die Aufgabe, eine Wägevorrichtung, und insbesondere ein Kochfeld, ein Möbel, insbesondere ein Küchenmöbel, oder ein Verfahren der eingangs erwähnten Art bereitzustellen, welche eine einfache aber genaue Wägung erlauben.
Diese Aufgabe wird von der Wägevorrichtung, dem Kochfeld, dem Möbel und dem Verfahren gemäss den unabhängigen Hauptansprüchen gelöst.
Demgemäss besitzt die Wägevorrichtung, welche insbesondere für Küchen geeignet ist, die folgenden Elemente:

- Eine Auflageplatte: Diese dient zum Auflegen des Gegenstands, dessen Masse gemessen werden soll.
- Eine Steuerung: Die Steuerung steuert den Wägevorgang.
- Mindestens ein Anregungsorgan: Dieses ist so angeordnet und ausgestaltet, dass es mechanische Schwingungen in der Auflageplatte erzeugen kann.
- Mindestens ein Messorgan: Dieses ist so angeordnet und ausgestaltet, dass es die mechanischen Schwingungen messen kann.

Weiter ist die Wägevorrichtung (vorzugsweise deren Steuerung) zu Folgendem ausgestaltet:

- Ermitteln mindestens einer spektralen Eigenschaft der Schwingungen der Auflageplatte (mit aufgesetztem Gegenstand) mit Hilfe des Anregungsorgans und des Messorgans und
- Verwenden der spektralen Eigenschaft zum Bestimmen der Masse des Gegenstands.

Der Erfindung liegt die Erkenntnis zugrunde, dass (wie weiter unten genauer ausgeführt) die spektralen Eigenschaften der Schwingungen der Auflageplatte mit dem aufgesetzten zu messenden Gegenstand von der Masse des Gegenstands abhängen. Solche spektralen Eigenschaften können in einfacher Weise genau bestimmt und zur Massenmessung herangezogen werden.
Insbesondere umfasst die spektrale Eigenschaft mindestens eine Resonanzfrequenz der Auflageplatte, z.B. indem die spektrale Eigenschaft eine solche Resonanzfrequenz ist oder direkt oder indirekt von einer solchen Resonanzfrequenz abhängt.
Zum Ermitteln der Masse aus der spektralen Eigenschaft der Auflageplatte gibt es, je nach Gegebenheiten, unterschiedliche Möglichkeiten, welche weiter unten genauer beschrieben werden.
Erfindungsgemäss ist die Steuerung dazu ausgestaltet,

mindestens zwei unterschiedliche spektrale Eigenschaften der Schwingungen zu ermitteln und
die mindestens zwei spektralen Eigenschaften zum Bestimmen der Masse des Gegenstands zu verwenden.

Dadurch kann eine höhere Genauigkeit erzielt werden, und/oder es kann nebst der Masse noch ein weiterer unbekannter Parameter ermittelt oder eliminiert werden, so z.B. der Durchmesser des Objekts (z.B. im Falle eines Topfs) oder ein Positionsparameter des Gegenstands auf der Auflageplatte.

Mit Vorteil ist die Steuerung dazu ausgestaltet,

die Resonanzfrequenzen mindestens zweier Eigenmoden der Auflageplatte zu ermitteln und
die Resonanzfrequenzen der mindestens zwei Eigenmoden zum Bestimmen der Masse des Gegenstands zu verwenden.

Für rechteckige oder quadratische Auflageplatten ist das Anregungsorgan und/oder das Messorgan mit Vorteil innerhalb einer Toleranz T auf mindestens einer der Diagonalen der Auflageplatte angeordnet, wobei die Toleranz T höchstens 10% der kürzesten Seitenlänge der Auflageplatte beträgt. Weiter liegt bzw. liegen der Abstand D 1 des Anregungsorgan von der Mitte der Diagonale und/oder der Abstand D2 des Messorgans von der Mitte der Diagonale in einem Bereich zwischen 5% und 45%, insbesondere zwischen 25% und 45%, der Länge L der Diagonale.

Wenn sowohl das Anregungsorgan als auch das Messorgan im Sinne dieser Definition auf mindestens einer der Diagonalen liegen, so können dabei beide Organe auf derselben Diagonale liegen oder auf unterschiedlichen Diagonalen.

In einer bevorzugten Ausführung liegen das Anregungsorgan und das Messorgan auf unterschiedlichen Diagonalen, wobei zwischen dem Anregungs- und dem Messorgan ein Bedienfeld unter der Auflageplatte angeordnet ist, da in diesem Falle in der Regel am Ort der Organe keine Heizelemente angeordnet sind.

Dem liegt die Erkenntnis zugrunde, dass zumindest die meisten tiefen Moden auf der Diagonalen im erwähnten Bereich keinen Schwingungsknoten besitzen, d.h. es lassen sich gute Messungen durchführen, wenn das Anregungsorgan und/oder das Messorgan in diesem Bereich angeordnet werden.

Wenn mehrere Anregungsorgane und/oder Messorgane vorgesehen sind, sollte vorzugsweise jeweils zumindest eines davon die erwähnte Anordnung relativ zur Diagonale und deren Mitte haben.

Die Erfindung betrifft auch ein Kochfeld mit einer Wägevorrichtung dieser Art. Das Kochfeld weist mehrere Heizelemente auf, welche unter der Auflageplatte angeordnet sind, derart, dass die Auflageplatte die Kochfläche des Kochfelds bildet.

Weiter betrifft die Erfindung auch ein Möbel, insbesondere ein Küchenmöbel, mit einer Wägevorrichtung dieser Art. Die Auflageplatte ist vorzugsweise an der Oberseite des Küchenmöbels angeordnet, so dass sie eine Arbeitsfläche des Küchenmöbels bildet.

Schliesslich betrifft die Erfindung auch ein Verfahren zum Betrieb einer Wägevorrichtung dieser Art. Dieses Verfahren umfasst zumindest die folgenden Schritte:

- Erzeugen mechanischer Schwingungen in der Auflageplatte mit dem Anregungsorgan,
- Messen mindestens einer spektralen Eigenschaft der Schwingungen mit dem Messorgan und
- Verwenden der mindestens einen spektralen Eigenschaft der Schwingungen zum Bestimmen der Masse des Gegenstands auf der Auflageplatte.

Vorteilhafterweise kann das Anregungsorgan auch dazu verwendet werden, mit dem Benutzer zu kommunizieren, z.B. indem mit dem Anregungsorgan ein haptisches oder akustisches Signal für den Benutzer erzeugt wird.

Die Erfindung betrifft auch ein Messgerät für das Kochfeld, Möbel oder Verfahren gemäss vorliegender Beschreibung, welches geeignet ist zur Anordnung an der Auflageplatte. Es umfasst zumindest die folgenden Elemente:

- mindestens ein Anregungsorgan zum Erzeugen mechanischer Schwingungen in der Auflageplatte und
- mindestens ein Messorgan zum Messen der mechanischen Schwingungen.

Das Messgerät ist dazu ausgestaltet:

- mit dem Anregungsorgan und dem Messorgan mindestens eine spektrale Eigenschaft der Schwingungen zu ermitteln und
- die spektrale Eigenschaft zum Bestimmen einer Masse des Gegenstands zu verwenden.

Das Messgerät ist weiter dazu ausgestaltet,

mindestens zwei unterschiedliche spektrale Eigenschaften der Schwingungen zu ermitteln und
die mindestens zwei spektralen Eigenschaften zum Bestimmen der Masse des Gegenstands zu verwenden.

Das Messgerät kann weiter die in den abhängigen Ansprüchen erwähnten Eigenschaften besitzen. Es kann z.B. als Smartphone, Tablet, Computer etc. ausgestaltet sein.

Die Erfindung kann z.B. dazu verwendet werden, ein Kochgefäss oder dessen Inhalt auf der Auflageplatte zu wägen. Sie kann auch dazu verwendet werden, um aufgrund der Gewichtsmessung (oder Änderung des Gewichts) einen Garprozess zu steuern und/oder Anweisungen für den Benutzer zu erzeugen.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 einen Schnitt durch eine erste Ausführung eines Kochfelds entlang Linie I-I von Fig. 2,
Fig. 2 das Kochfeld von Fig. 1 von oben,
Fig. 3 ein Blockdiagramm einiger Komponenten der Wägevorrichtung,
Fig. 4 ein Beispiel von Werten der tiefsten Resonanzfrequenz f1 in Abhängigkeit der Masse einer Last,
Fig. 5 die tiefste Resonanzfrequenz in Abhängigkeit der Masse und des Radius einer Last,
Fig. 6 die zweite Resonanzfrequenz in Abhängigkeit der Masse und des Durchmessers einer Last,
Fig. 7 mögliche Werte von Masse und Radius bei gegebener erster und zweiter Resonanzfrequenz,
Fig. 8 einen Schnitt durch eine zweite Ausführung eines Kochfelds entlang Linie I-I von Fig. 2,
Fig. 9 einen Schnitt durch ein Küchenmöbel mit einer Wägevorrichtung,
Fig. 10 eine Illustration zur Ermittlung optimaler Positionen für das Anregungs- und Messorgan aus einer Modenanalyse der Auflageplatte,
Fig. 11 eine Ausführung der Steuerung mit neuronalem Netzwerk und
Fig. 12 eine Ausführung, bei welcher Anregungs- und Messorgan von oben an der Auflageplatte angeordnet und in einem Messgerät integriert sind.

Wege zur Ausführung der Erfindung

*Definitionen*

Unter dem "Durchmesser" des zu messenden Objekts wird der Durchmesser der Berührungsfläche des Objekts mit der Auflagefläche verstanden, unter der (idealisierten) Annahme, dass die Oberfläche der Auflageplatte und die Unterseite des Objekts völlig plan sind. Alternativ wird unter dem Begriff der "reale" Durchmesser verstanden, den die Waage sieht.

Unter dem Merkmal, dass die Auflageplatte "aus Glaskeramik" ist, ist zu verstehen, dass die Glaskeramik bis auf allfällige Beschriftungen, Beschichtungen und/oder andere Oberflächenelemente zu mindestens 90% aus Glaskeramik ist.

Eine "spektrale Eigenschaft" einer Schwingung beschreibt mindestens eine Eigenschaft der Bewegung der Auflageplatte bei deren Anregung. Dabei kann es sich z.B. um eine Amplitude oder eine Phase bei einer gewissen Frequenz, um die Frequenz einer gewissen spektralen Eigenschaft (z.B. eines Peaks des Spektrums), um die Zeitverzögerung zwischen Anregung und Antwort oder zwischen den Bewegungen an unterschiedlichen Positionen der Auflageplatte, um ein Anstiegs- oder Abklingverhalten bei kurzen Anregungen etc. handeln.

*Grundaufbau*

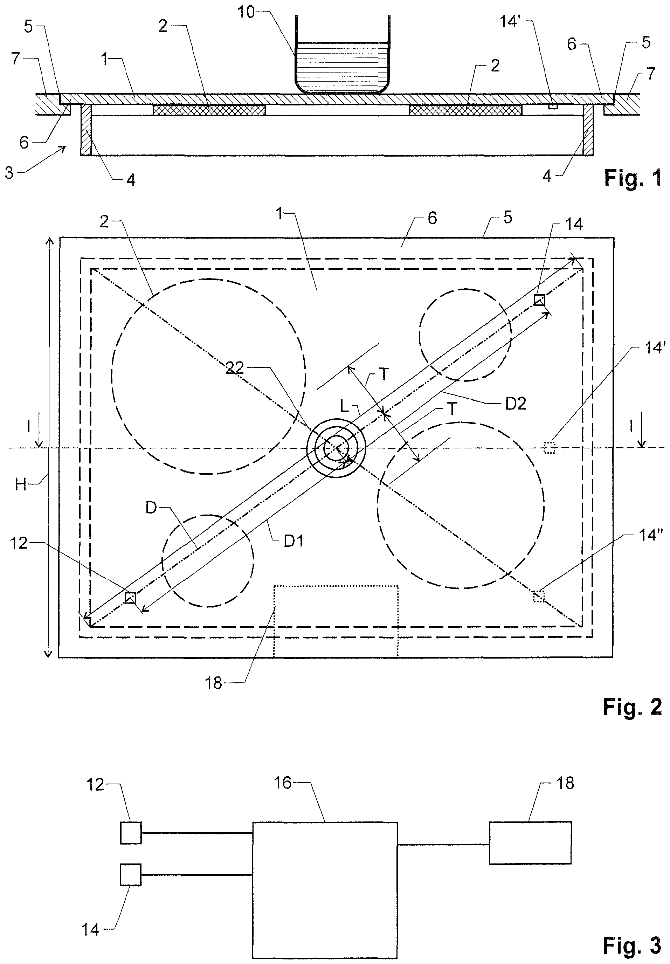

Fig. 1 - 3 zeigen ein Kochfeld mit einer Auflageplatte 1, z.B. aus Glaskeramik und z.B. vier Heizelementen 2 unter der Auflageplatte 1.

Auf der Unterseite der Auflageplatte 1 ist ein Geräteaufbau 3 angeordnet, welche die elektrischen und weitere mechanische Komponenten des Kochfelds aufnimmt. Dieser besitzt einen Geräterahmen 4, der an der Unterseite der Auflageplatte 1 befestigt ist.

Der Geräterahmen 4 weist in der gezeigten Ausführung die gleiche Form wie der Umriss der Auflageplatte 1 auf, er ist jedoch allseitig beabstandet vom Aussenrand 5 der Auflageplatte 1, so dass die Auflageplatte 1 einen sich horizontal über den Geräterahmen 4 erstreckenden Überstand 6 bildet. Der Geräterahmen 4 kann jedoch in seiner Form von der Auflageplatte 1 auch abweichen.

Der Überstand 6 kann zur Montage der Auflageplatte in der Öffnung einer Platte 7 eines Küchenmöbels verwendet werden.

Mit Vorteil ist der Geräterahmen 4 auf jeder Längsseite an mehreren Punkten, insbesondere entlang der ganzen jeweiligen Länge, mit der Auflageplatte verbunden, z.B. mittels Kleben. Damit bildet der Geräterahmen 4 einen definierten Schwingungsrahmen für die Schwingungsbewegungen im Mittelbereich der Auflageplatte, der die mechanischen Resonanzen der Auflageplatte 1 von den Details der Montage des Geräts am Aussenrand 5 unabhängiger macht. Dies ist für das im Folgenden beschriebene Messverfahren vorteilhaft.

Weiter besitzt der Geräterahmen 4 vorzugsweise einen Durchmesser von mindestens 80%, aber höchstens 98% der Auflageplatte 1, so dass für alle Diagonalrichtungen radial innerhalb des Geräterahmens ein grosser Bereich bleibt, in welchem die Auflageplatte 1 im Wesentlichen frei schwingen kann, aber gleichzeitig ein ausreichender Überstand 6 für die Montage zur Verfügung steht.

Innerhalb des Geräterahmens 4 sollte die Auflageplatte 1 vorteilhaft frei schwingen können, indem dort z.B. keine steifen, schweren Bauteile an der Auflageplatte 1 befestigt sind, allenfalls mit Ausnahme des Anregungsorgans.

*Messtechnik*

Die vorliegende Messtechnik basiert, unabhängig von der genauen Ausgestaltung der Wägevorrichtung (z.B. ob sie Teil eines Kochfelds oder einer anderen Anordnung ist) auf der Idee, mindestens eine mechanische Resonanzfrequenz der Auflageplatte 1 auszumessen. Damit kann die Masse einer auf der Auflageplatte angeordneten Last 10 bestimmt werden. Dies wird im Folgenden näher beschrieben.

Die Auflageplatte 1 besitzt verschiedene resonante Schwingungsmoden für Auslenkungen senkrecht zur Auflageplatte 1 (im Folgenden "Eigenmoden" oder "Moden" genannt). Wenn z.B. angenommen wird, dass im Bereich des Geräterahmens 4 im Eigenmode mit der tiefsten Eigenfrequenz keine Bewegung stattfindet, so bewegt sich in diesem Mode die Mitte der Platte am stärksten, d.h. es werden ein Wellenbauch im Zentrum der Auflageplatte 1 und ein Knoten entlang des Geräterahmens 4 ausgebildet. Im Mode mit der zweittiefsten Frequenz befinden sich, bei einer rechteckigen Platte, zwei Schwingungsbäuche gegenläufiger Auslenkung beabstandet voneinander auf der Längsmittelachse der Auflageplatte 1, etc.

Die Schwingungsbewegungen (d.h. die Auslenkungen) der Auflageplatte 1 bei den tiefsten Moden finden dabei im Wesentlichen in vertikaler Richtung statt.

Wird nun eine Last 10 auf die Auflageplatte 1 gesetzt, so werden die Resonanzfrequenzen in der Regel sinken, und die Moden können sich auch in Form und Amplitudenverteilung. Die Änderung hängt zum einen von der Masse der Last 10 ab, aber zum anderen auch von deren Form (d.h. von der Form und insbesondere dem Durchmesser der Berührungsfläche zwischen Last 10 und Auflageplatte 1) und deren Position.

Durch Ausmessen mindestens einer oder allenfalls mehrerer Resonanzfrequenzen lassen sich somit die Masse sowie allfällige weitere Parameter der Last ausmessen.

Um entsprechende Messungen durchzuführen, weist die Wägevorrichtung mindestens ein Anregungsorgan 12 und mindestens ein Messorgan 14 auf, wie dies in Fig. 2 dargestellt ist.

Mit dem Anregungsorgan 12 wird die Auflageplatte 4 in mechanische Schwingungen, insbesondere senkrecht zur Fläche der Auflageplatte 4, versetzt. Mit dem Messorgan 14 können diese Schwingungen gemessen werden.

Bei Anregungsorgan 12 kann es sich z.B. um einen elektromechanischen Hammer handeln, welcher einen kurzen Stoss auf die Platte ausübt. Damit werden Schwingungen über einen breiten Frequenzbereich angeregt. Bei den Resonanzfrequenzen werden dabei die stärksten Schwingungsamplituden erzeugt. Sie können durch Spektralanalyse des Signals des Messorgans 14 gemessen werden, z.B. mittels Fourier-Analyse.

Das Messorgan 14 kann z.B. ein Mikrophon sein, oder es kann als kapazitives oder optisches Messorgan die zeitabhängige Auslenkung der Auflageplatte an einem gegebenen Punkt ermitteln. Insbesondere kann es sich um einen Beschleunigungssensor handeln.

In einer anderen Ausführung kann das Anregungsorgan 12 z.B. als eine zu Schwingungen einer gewünschten Frequenz anregbare Masse ausgestaltet sein, oder als Lautsprecher, mit welchem an einer Stelle eine periodische Kraft auf die Auflageplatte 4 ausgeübt werden kann.

In diesem Falle kann die Frequenz des Anregungsorgans 12 z.B. durch eine Vielzahl von Frequenzen durchgestimmt werden, und für jede Frequenz wird dann das Signal des Messorgans 14 analysiert, um so diejenigen Frequenzen mit stärkster Schwingungsamplitude zu bestimmen.

In einer weiteren Ausführung können mit dem Anregungsorgan mehrere Frequenzkomponenten gleichzeitig erzeugt werden, in einem überlagerten Signal. Dabei kann es sich z.B. um eine Überlagerung mehrerer periodischer Signale handeln, oder es kann z.B. auch ein Rauschen, insbesondere ein weises oder rosa Rauschen, erzeugt werden. In diesen Fällen kann das Signal des Messorgans z.B. mittels Spektralanalyse, insbesondere mittels Fourier-Transformation ausgewertet werden.

In einer weiteren Ausführung können das Anregungsorgan 12 und das Messorgan 14 von demselben Bauteil gebildet werden, z.B. von einer elektrischen Spule, die bei einem Permanentmagneten angeordnet ist, wobei entweder die Spule oder der Permanentmagnet mit der Auflageplatte verbunden ist. Durch einen kurzen Stromstoss durch die Spule wird ein Kraftimpuls auf die Auflageplatte 1 ausgeübt, und sodann wird der Stromverlauf durch die Spule gemessen, um die Bewegung der Platte nach dem Kraftimpuls zu analysieren. Alternativ kann das Anregungsorgan 12 z.B. mit bekannter Spannung (oder mit bekanntem Strom) betrieben werden, und sodann wird der Strom (bzw. die Spannung) gemessen, um daraus ein Signal für die Schwingung abzuleiten.

Mit Vorteil liegen das Anregungsorgan 12 und das Messorgan 14 auf Punkten, bei denen die frequenztiefsten Resonanzen der Auflageplatte 1 starke Bewegungen zeigen, d.h. sie sind weit entfernt von den jeweiligen Schwingungsknoten. Sie sind deshalb bevorzugt auf mindestens einer der Diagonalen D der Auflageplatte, entweder exakt oder zumindest innerhalb einer gewissen Toleranz T angeordnet, d.h. der Abstand zwischen der Diagonale und dem Messorgan 14 sollte kleiner als die Toleranz T sein. Diese Toleranz T beträgt einen Bruchteil der kürzeren Seitenlänge H der Auflageplatte 1, vorzugsweise höchstens 10% von H.

Unter der Diagonale D ist dabei die Verbindungslinie zwischen zwei gegenüber liegenden Eckpunkten der Auflageplatte 1 zu verstehen oder, falls die Auflageplatte 1 mit einem steifen Geräterahmen 4 verbunden ist, der einen Schwingungsknoten erzeugt, ist die Länge D die Verbindungslinie zwischen zwei gegenüber liegenden Eckpunkten des Geräterahmens 4.

Aus demselben Grund liegt der Abstand D1 des Anregungsorgans 12 von der Mitte der Diagonale D bevorzugt in einem Bereich zwischen 5% und 45%, insbesondere zwischen 25% und 45%, der Länge L der Diagonale D. Ebenso liegt der Abstand D2 des Messorgans 14 von der Mitte der Diagonale D bevorzugt in einem Bereich zwischen 5% und 45%, insbesondere zwischen 25% und 45%, der Länge L der Diagonale D.

In einer besonders bevorzugten Ausführung liegen das Anregungsorgan 12 und das Messorgan 14 auf unterschiedlichen Diagonalen, wie dies in Fig. 2 für das Messorgan 14" angedeutet ist. Die Position ist dabei mit Vorteil so gewählt, dass zwischen den beiden Organen 12, 14" ein Bedienfeld 18 des Kochfelds angeordnet ist, da bei Kochfeldern auf der Seite des Bedienfelds 18 die Heizelemente 2 oftmals etwas zurückversetzt sind. Damit wird es einfacher, die Organe 12, 14" in kühlen Bereichen anzuordnen.

Fig. 3 zeigt ein Blockdiagramm einiger der im Zusammenhang mit der Wägung benutzter Komponenten der Wägevorrichtung. Insbesondere ist eine Steuerung 16 vorgesehen, welche über geeignete Interfaceschaltungen mit dem Anregungsorgan 12 und dem Messorgan 14 verbunden ist. Zudem ist das Bedienfeld 18 vorgesehen, z.B. ein berührungsempfindlicher Bildschirm, um die Masse und/oder allenfalls andere Parameter anzuzeigen und/oder um Befehle vom Benutzer zu empfangen.

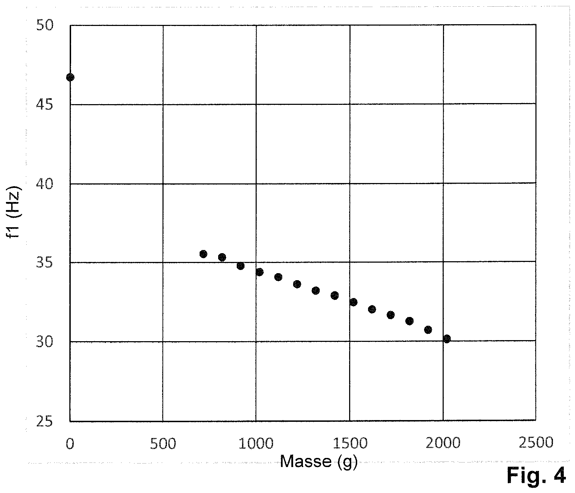

Fig. 4 zeigt die Resonanzfrequenz f1 des frequenztiefsten Modes einer rechteckigen Auflageplatte 1 aus Glaskeramik mit einer Breite von 910mm, einer Länge von 514mm und einer Dicke von 4mm für Lasten mit unterschiedlicher Masse. Dabei wurde ein Gefäss mit Durchmesser 148mm auf die Mitte der Auflageplatte 1 gestellt und zunehmend mit Wasser gefüllt, um dessen Masse zu erhöhen.

Wie ersichtlich, sinkt die Resonanzfrequenz f1 mit zunehmender Last ab.

Damit ist es ohne weiteres möglich, die Masse aus der Frequenz zu bestimmen.

Die Bestimmung der Masse aus der frequenztiefsten Resonanz alleine setzt jedoch voraus, dass der reale Durchmesser sowie die Position der Last bekannt sind.

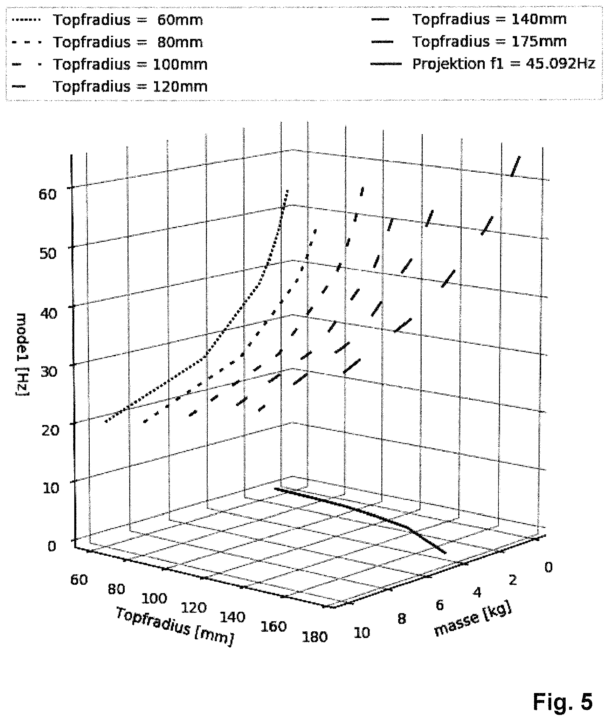

Wenn man z.B. annimmt dass auch der Durchmesser der Last variiert, aber diese bei jeder Messung in der Mitte der Auflageplatte 1 aufgesetzt wird, so hängt die frequenztiefste Resonanz f1 von Durchmesser und Masse ab. Dies ist in Fig. 5 illustriert, wo "Topfradius" den Radius der Last kennzeichnet, "masse" deren Masse und "model" die Frequenz f1.

Im Raum der Grafik sind Kurven für Masse gegen Frequenz für verschiedene Radien dargestellt. In der Ebene "masse" vs. "Topfradius" ist die Kurve möglicher Wertepaare als Beispiel für eine gemessene Frequenz f1 = 45.092 Hz eingezeichnet.

Fig. 2 zeigt dieselbe Darstellung, aber auf der vertikalen Achse ist die zweittiefste Resonanzfrequenz f2 eingezeichnet, und die Kurve in der Ebene "masse" vs. "Topfradius" zeigt die möglichen Wertepaare als Beispiel für eine gemessene Frequenz f2 = 109.878 Hz.

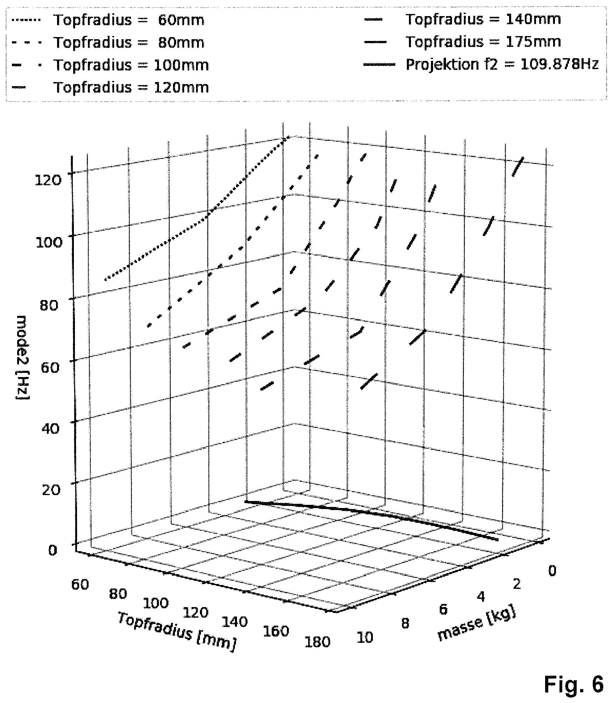

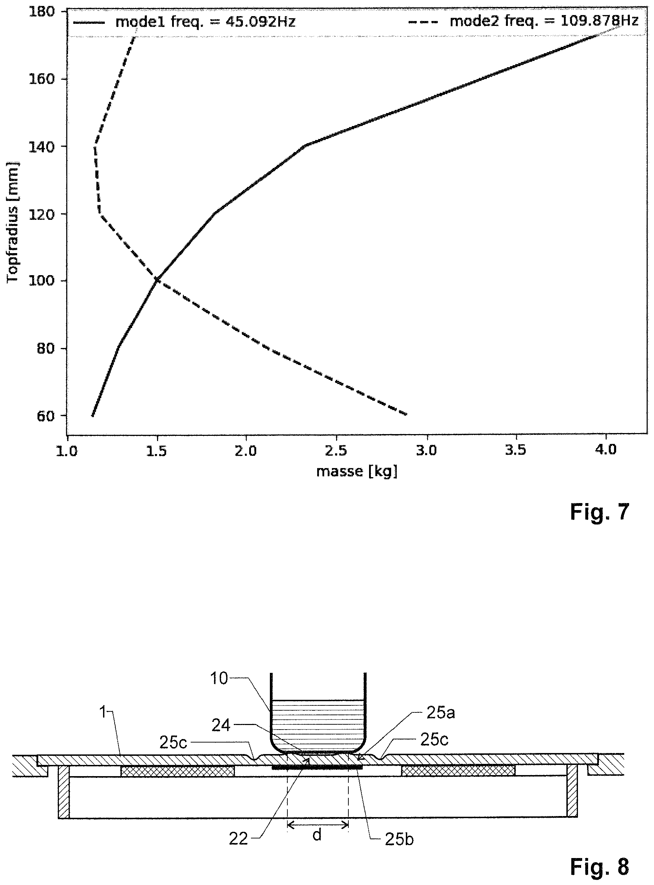

Wenn man nun die beiden Kurven in der Ebene "masse" vs. "Topfradius" von Fig. 5 und 6 zusammen betrachtet, so ergibt sich die Darstellung gemäss Fig. 7. Diese zeigt, dass im vorliegenden Geräteaufbau bei f1 = 45.092 Hz und f2 = 109.878 Hz die Masse rund 1.5 kg und der Radius rund 100 mm betragen.

Dies illustriert, dass aus der Messung von mindestens zwei Resonanzfrequenzen f1, f2 nebst der Masse ein zweiter Parameter bestimmt oder kompensiert werden kann, hier z.B. der Durchmesser der Last.

In guter Näherung hängt die Resonanzfrequenz eines gegebenen Eigenmodes von den Parametern Masse m, Durchmesser d und Position, ausgedrückt z.B. in x- und y-Koordinaten ab. Mit anderen Worten gilt also für die Frequenzen der Moden 1, 2, 3 etc.:

$$f1 = F1(m, d, x, y) \tag{1}$$

$$f2 = F2(m, d, x, y)$$

$$f3 = F3(m, d, x, y)$$

$$\ldots$$

Die Funktionen F1, F2, etc. können dabei z.B. aus Kalibrierungsmessungen und/oder theoretischen Berechnungen ermittelt werden. Für die theoretische Berechnung kann z.B. eine Modalanalyse im Rahmen einer Finite-Elemente-Simulation durchgeführt werden.

(1) stellt ein System von N unabhängigen Gleichungen dar, deren linke Seite jeweils gemessen werden kann und deren Funktionen F1, F2... FN. jeweils bekannt sind. Die Masse m ist in der Regel unbekannt. Sind die anderen Parameter d, x und y bekannt, genügt für die Ermittlung die Messung eines Mode (N = 1), vorzugsweise jenes von f1.

Es kann jedoch auch mehr als ein Mode ausgemessen werden, in welchem Falle ein überbestimmtes Gleichungssystem vorliegt, aus welchem z.B. mittels Ausgleichsrechnung ein genaueres Resultat ermittelt werden kann.

Ist auch der Durchmesser d unbekannt, so müssen die Frequenzen von N = 2 oder mehr Moden gemessen werden.

Sind z.B. zusätzlich zum Durchmesser d auch die Positionskoordinaten x und y unbekannt, so werden mit Vorteil mindestens N = 4 Moden ausgemessen.

Bevorzugt werden die Resonanzfrequenzen von mindestens N = 2, insbesondere von mindestens N = 3, Eigenmoden ermittelt und zum Bestimmen der der Masse m verwendet.

Mit Vorteil sind die gemessenen Resonanzfrequenzen die tiefsten Resonanzfrequenzen der Auflageplatte. Diese sind am besten voneinander unterscheidbar, und zudem entsprechen sie grossen "Wellenlängen", weshalb sie unter Umständen weniger empfindlich auf Position und Durchmesser sind.

Zu beachten ist, dass zusätzlich oder alternativ zu den Resonanzfrequenzen auch andere Eigenschaften der Schwingungen der Auflageplatte 1 zur Gewichtsmessung verwendet werden können, siehe Abschnitt "Andere spektrale Eigenschaften und/oder Auswertungen", weiter unten.

*Kalibrierung*

Nebst den erwähnten Parametern der Last sind die Resonanzfrequenzen z.B. auch davon abhängig, wie die Auflageplatte montiert ist.

Beispielsweise sind die Frequenzen abhängig von der Montage der Auflageplatte 1 im jeweiligen Küchenmöbel, insbesondere wenn der Geräterahmen 4 die Schwingungen im Überstand 6 nicht völlig von jenen im inneren Bereich der Auflageplatte 1 abzukoppeln vermag.

Deshalb wird das Gerät nach seinem Einbau vorzugsweise kalibriert.

In einer besonders einfachen Ausführung kann die Steuerung 16 des Geräts z.B. dazu ausgestaltet sein, die eine Eichmessung bei bekannter Last m, insbesondere im lastfreien Zustand (m = 0), durchzuführen.

Beispielsweise kann auf diese Weise die Länge L der frei schwingenden Diagonale D als Eichparameter bestimmt werden, wonach die Funktionen F1, F2, etc. von Gleichung 1 festgelegt werden können.

*Brutto- und TaraMessungen*

Zusätzlich oder alternativ hierzu ist die Steuerung 16 dazu ausgestaltet, die Messung an einem leeren Behälter ("Taramessung") und an einem vollen Behältnis ("Bruttomessung") durchzuführen. Beträgt die Masse des Behältnisses m1 und jene der Füllung (welche der Benutzer als Nettowert messen möchte) m2, so können für die erste Resonanzfrequenz f1 und die zweite Resonanzfrequenz f2 somit vier Werte f11 und f12 (für f1) und f21 und f22 (für f2) ermittelt werden:

$$f11 = F1(m1, d, x, y) \qquad (2)$$
$$f12 = F1(m1 + m2, d, x, y)$$
$$f21 = F2(m1, d, x, y)$$
$$f22 = F2(m1 + m2, d, x, y)$$

Dabei nimmt die Steuerung 16 vorzugsweise an, dass sich die Position x, y und der Durchmesser d des Behältnisses zwischen der Taramessung und der Bruttomessung nicht ändert.

Auf diese Weise können pro Mode zwei Messwerte gewonnen werden, so dass zusätzliche Messwerte zur Verfügung stehen, was die Bestimmung zusätzlicher unbekannter Parameter oder (z.B. durch Ausgleichsrechnung) eine genauere Messung überbestimmter Parameter erlaubt.

Dabei kann die Steuerung 16 dazu ausgestaltet sein, dem Benutzer nach der Taramessung anzuzeigen, dass der Behälter zum Durchführen der Bruttomessung gefüllt werden muss, oder es können Eingabemittel vorgesehen sein, welche es dem Benutzer erlauben anzugeben, ob eine Messung eine Tara- oder Bruttomessung ist.

*Positionierhilfen, Versteifungen*

Wie erwähnt, sind die Positionskoordinaten x, y im Allgemeinen nicht bekannt. Damit erhöht sich die Messunsicherheit, und/oder es muss eine grössere Anzahl von Moden ausgemessen werden.

Mit Vorteil ist die Wägevorrichtung deshalb mit einer Positionierhilfe 22 ausgestattet (vgl. Fig. 2), welche eine Sollposition für den zu messenden Gegenstand markiert. Dabei kann es sich z.B. um konzentrische Ringe oder dergleichen handeln, die auf der Auflageplatte 1 angebracht sind.

Die Positionierhilfe 22 ist mit Vorteil im Zentrum der Auflageplatte 1 angeordnet, da an einem zentrierten Gegenstand in der Regel die genausten Messungen durchgeführt werden können. Die Positionierhilfe kann jedoch auch an einer Position abseits des Zentrums angeordnet werden, z.B. kann für jede "Kochzone" je eine Positionierhilfe vorgesehen sein.

In einer weiteren Ausführung, welche in Fig. 8 dargestellt ist, bildet die Positionierhilfe 22 einen erhabenen, vorzugsweise ringförmigen Bereich 24 in der Auflageplatte, d.h. einen Bereich, welcher über die durchschnittliche Höhe der Oberseite der Auflageplatte 1 nach oben vorsteht, vorzugsweise um mindestens 1 mm.

Diese Ausgestaltung hat den Vorteil, dass der erhabene Bereich 24 den effektiven Kontaktdurchmesser d unabhängig vom Durchmesser Grösse der eigentlichen Last 10 (zumindest wenn dieser grösser als d ist) festlegen kann, welcher z.B. in Gleichung (1) Eingang findet.

Insbesondere beträgt der Durchmesser d des erhabenen Bereichs 24 für eine stabile Auflage üblicher Kochgefässe mindestens 5 cm aber, damit er kleiner ist als die meisten der üblichen Kochgefässe, nicht mehr als 15 cm, insbesondere nicht mehr als 10 cm.

Der Erhabene Bereich 24 kann z.B. auch als Ring oder als mehrere, nicht-zusammenhängende Unterbereiche ausgestaltet sein.

Alternativ oder zusätzlich zu einer Positionierhilfe kann die Auflageplatte 1 einen versteiften Bereich 25a aufweisen, wobei die Steifigkeit der Auflageplatte 1 innerhalb des versteiften Bereichs 25a grösser ist als ausserhalb, vorzugsweise um mindestens 50%. Dieser versteifte Bereich bildet eine Sollauflageposition für das Objekt 10. Dank der Versteifung werden die Moden unabhängiger vom Durchmesser des Objekts.

Beispielsweise kann der versteifte Bereich durch eine Verdickung 25b der Auflageplatte 1 realisiert werden. Die Verdickung 25b kann dabei einstückig mit der Auflageplatte 1 ausgeformt oder als zusätzliches Bauelement aufgebracht sein, z.B. durch Aufkleben. Mit Vorteil ist die Verdickung 25b unterhalb der Auflageplatte 1 angeordnet, so dass die Oberseite der Auflageplatte 1 flach bleibt.

Bevorzugt beträgt der Durchmesser des versteiften Bereichs mindestens 10 cm, insbesondere mindestens 20 cm, und/oder weniger als 25% des maximalen Durchmessers der Auflageplatte 1.

Bevorzugt befindet sich die Mitte der Auflageplatte im versteiften Bereich 25a.

Alternativ oder zusätzlich kann die Auflageplatte 1 einen verdünnten Bereich 25c aufweisen, welcher sich um den Sollauflagebereich für das Objekt erstreckt. Auch damit können die Moden vom Durchmesser des Objekts besser entkoppelt werden.

Die Dicke der Auflageplatte am Ort des verdünnten Bereichs 25c beträgt mit Vorteil weniger als 75% der Dicke der Auflageplatte 1 radial inner- und ausserhalb des verdünnten Bereichs 25c.

Der Innendurchmesser des verdünnten Bereichs beträgt mit Vorteil wiederum mindestens 10 cm, insbesondere mindestens 20, und/oder der Aussendurchmesser des verdünnten Bereichs beträgt mit Vorteil höchstens 25% des maximalen Durchmessers der Auflageplatte 1.

Bevorzugt erstreckt sich der verdünnte Bereich 25c um die Mitte der Auflageplatte 1.

*Mehrere Anregungs- und/oder Betätigungsorgane*

Die unterschiedlichen Moden können bei der Messung über ihre Frequenz unterschieden werden. Bei höheren Moden ist dies jedoch nicht immer gewährleistet, da je nach Last und deren Position und/oder deren Durchmesser sich die Moden auch in der Frequenzreihenfolge vertauschen können.

Um einzelne Moden besser unterscheiden zu können, kann es deshalb von Vorteil sein, mehrere Messorgane an unterschiedlichen Positionen der Auflageplatte 1 vorzusehen. So zeigt z.B. Fig. 2 ein zweites Messorgan 14', welches dort angeordnet ist, wo gewisse Moden einen Knoten haben, z.B. auf der Verbindungslinie zwischen zwei gegenüber liegenden Seitenmittelpunkten. Damit können Moden besser unterschieden und den jeweiligen Funktionen Fi in Gleichung (1) zugeordnet werden.

Bei mehreren Messorganen 14, 14' ist die Steuerung 16 vorzugsweise dazu ausgestaltet, das Amplitudenverhältnis und/oder die Phasenverschiebung zwischen Signalen der Messorgane bei der jeweiligen Resonanzfrequenz zu bestimmen.

Denkbar ist auch, dass mehrere Anregungsorgane 12 vorgesehen sind, welche z.B. in einer ersten Messung gegenläufig und in einer anderen zweiten Messung gleichläufig betrieben werden, um gewisse Moden gezielt anzuregen bzw. zu unterdrücken.

*Anordnung des Anregungs- und Messorgans*

Oben wurde bereits unter Verweis auf Fig. 2 dargelegt, dass das Anregungsorgan 12 und/oder das Messorgan 14 vorzugsweise in gewissen Bereichen z.B. auf einer oder beiden Diagonalen einer rechteckigen Auflageplatte 1 angeordnet werden, da dort die meisten Moden keine Knoten haben.

Im Folgenden wird diese Überlegung etwas verallgemeinert.

Wenn angenommen wird, dass die Wägevorrichtung dazu ausgestaltet ist, die Resonanzfrequenzen eines gegebenen Satzes von Moden zu bestimmen, so sollte das Anregungsorgan 12 und/oder das Messorgan 14 jeweils an einer Stelle angeordnet werden, wo die Schwingungsamplituden (Auslenkungsamplituden) aller dieser Moden mindestens 25% der maximalen Schwingungsamplitude des jeweiligen Modes beträgt.

Wenn die Steuerung 16 beispielsweise die Moden 0, 1 und 2 ausmisst und der Mode 0 (in der Mitte der Auflageplatte) eine maximale Amplitude A0max hat, der Mode 1 (in der rechten und linken Hälfte der Auflageplatte) eine maximale Amplitude A1max hat, und der Mode 2 (in der oberen und unteren Hälfte der Auflageplatte) eine maximale Amplitude A2max hat, so sollte die Auslenkungsamplitude am Ort des Anregungsorgans 12 und/oder des Messorgans 14 bevorzugt mindestens A0max $\times$ 0.25 für den Mode 0, A1max $\times$ 0.25 für den Mode 1 und A2max $\times$ 0.25 für den Mode 2 betragen.

Mit anderen Worten sollte das Anregungsorgan 12 und/oder das Messorgan 14 nicht zu nahe bei einem der Knotenlinien der von der Steuerung 16 ausgemessenen Moden liegen.

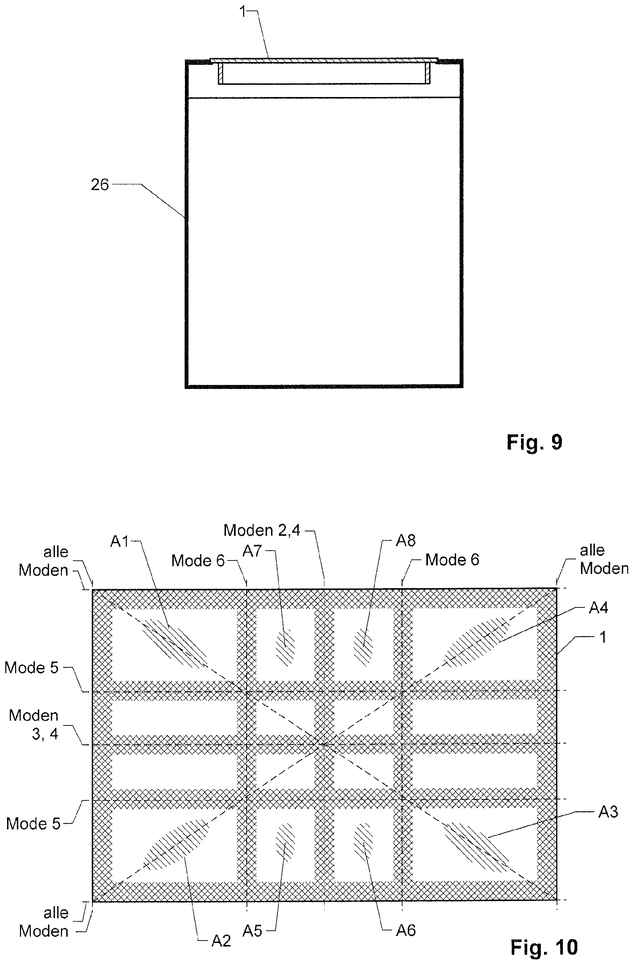

Dies ist in Fig. 10 etwas genauer illustriert. Dort zeigen die kreuzschaffierten Bereiche die Knotenlinien der einzelnen Moden, jeweils unter Angabe, für welche Moden sie gelten. So haben, je nach Montage, am Rand der Auflageplatte 1 oder beim Geräterahmen 4 alle Moden eine Knotenlinie. Zudem haben die Moden 2 und 4 eine Knotenlinie entlang der Verbindungslinie der Seitenhalbierenden der längeren Seitenkante und die Moden 3 und 4 eine Knotenlinie entlang der Seitenhalbierenden der kürzeren Seitenkanten. Die höheren Moden 5 und 6, welche entlang einer der Hauptrichtungen jeweils drei Schwingungsbäuche ausbilden, besitzen zudem Knotenlinien ungefähr auf einem und zwei Dritteln der Länge bzw. Breite der Platte.

Entsprechend gibt es Bereiche A1, A2..., an denen alle Moden relativ starke Schwingungsamplituden besitzen, so z.B. die Bereiche A1 - A4 auf der Diagonalen (welche den zu Fig. 2 angegebenen Positionen entsprechen), oder z.B. die Bereiche A5 - A8 abseits der Diagonalen. Das Anregungsorgan 12 und/oder das Messorgan 14 wird bzw. werden mit Vorteil in einem dieser Bereiche A1 - A8 angeordnet.

Diese hier beschriebene Bedingung wird mit Vorteil sowohl für das Anregungsorgan 12 als auch das Messorgan 14 realisiert. Sind mehrere Anregungsorgane und/oder mehrere Messorgane vorhanden, so sollte sie mit Vorteil zumindest für ein Anregungsorgan und/oder zumindest für ein Messorgan erfüllt sein.

*Andere spektrale Eigenschaften und/oder Auswertungen*

In den obigen Beispielen wurde(n) als spektrale Eigenschaften) jeweils die Resonanzfrequenz(en) der Auflageplatte erwähnt. Es können jedoch auch andere spektrale Eigenschaften der Schwingungen der Auflageplatte bei Anregung verwendet werden, so z.B. eine oder mehrere der folgenden Eigenschaften:

- Phasen von Schwingungen bei bestimmten Frequenzen. Dabei handelt es sich insbesondere um die relative Phase zwischen der Anregung und der Schwingung bei einer gegebenen Frequenz. Alternativ oder zusätzlich kann es sich auch um die relativen Phasen zwischen den Schwingungen bei derselben Frequenz an unterschiedlichen Stellen der Auflageplatte 1 handeln.
- Amplituden oder Amplitudenverhältnisse. Dabei kann es sich z.B. um eine absolute Schwingungsamplitude bei einer gegebenen Frequenz oder bei einer Resonanz handeln, und/oder um relative Schwingungen bei unterschiedlichen Frequenzen und/oder an unterschiedlichen Orten der Auflageplatte 1.
- Die spektrale Breite mindestens einer Resonanz (z.B. FWHM).
- Spektrale Orte tiefer Amplitude, z.B. eine oder mehrere Minima im Fourier-Spektrum der Schwingungen.
- Verhältnisse zwischen Maxima (Peaks) und Minima (Tälern).
- Eine oder mehrere Amplituden im Spektrum bei einer oder mehreren festen Frequenzen.
- Schnittpunkt des Fourier-Spektrums mit einer gegebenen Kurve.
- Abklingzeit einer Anregung.

Generell können beliebige Eigenschaften des Frequenzspektrums der Schwingungen zur Auswertung verwendet werden.

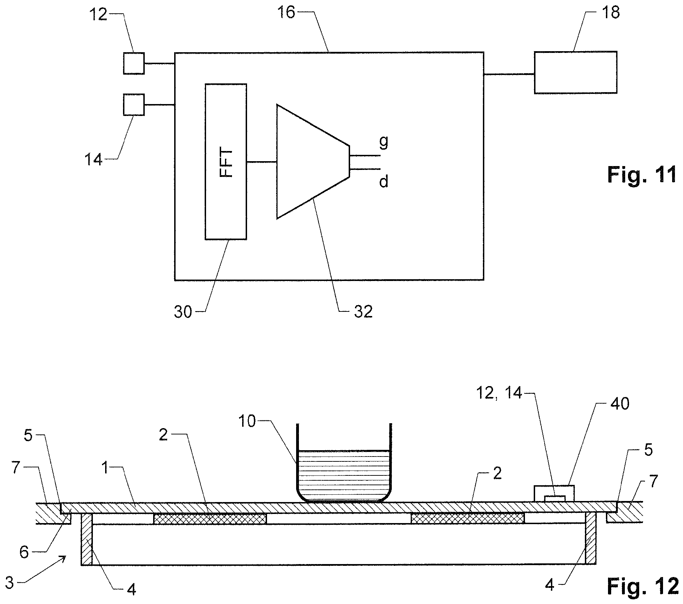

Eine besonders vorteilhafte Ausführung der Steuerung 16 ist in Fig. 11 dargestellt. Hier besitzt die Steuerung 16 einen Spektralanalysator 30, welcher mehrere spektrale Komponenten des Signals (bzw. der Signale) von mindestens einem Messorgan 14 ermittelt.

Der Spektralanalysator 30 kann z.B. eine Fourier-Analyse durchführen. In diesem Fall werden Fourierkomponenten der Signale errechnet, insbesondere komplexe Fourierkomponenten, welche auch Aussagen über die Phasen der Komponenten machen. Insbesondere kann der Spektralanalysator als FFT- oder DFT-Einheit ausgestaltet sein.

Zusätzlich oder alternativ dazu kann der Spektralanalysator z.B. eine diskrete Laplace-Transformation, oder es kann eine andere mathematische Operation (z.B. eine Wavelet-Transformation) verwendet werden, welche, vom Spektrum abhängige Komponenten erzeugt.

Die vom Spektralanalysator 30 erzeugten Parameter, welche spektrale Eigenschaften der Schwingung der Auflageplatte beschreiben, werden in geeigneter Weise analysiert. Beispielsweise können ein oder mehrere Peaks des Spektrums detektiert werden, um die Resonanzfrequenzen zu bestimmen und in der oben erwähnten Weise auszuwerten.

In einer anderen vorteilhaften Ausführung werden die vom Spektralanalysator 30 erzeugten Daten einem tiefen neuronalen Netzwerk 32 zugeführt, vorzugsweise mit einer Tiefe grösser als 2. Dieses Netzwerk 32 besitzt, einen, zwei oder mehrere Ausgänge, welche von der Wägevorrichtung zu ermittelnde Parametern entsprechen, z.B. dem Gewicht g und dem Durchmesser d eines Gegenstands.

Das neuronale Netzwerk 32 ist vorzugsweise ein "feed forward" neuronales Netzwerk.

Das Netzwerk 32 wird mittels Kalibrierungsmessungen trainiert, bei denen die Parameter der Last variiert werden (z.B. der Durchmesser und die Position eines Objekts auf der Auflageplatte). Für jeden solchen Parametersatz werden die Signale des Messorgans 14 aufgenommen und daraus mit dem Spektralanalysator 30 die Eingangswerte des Neuronalen Netzwerks 32 errechnet.

Anstelle von Eichmessungen können auch numerische Simulationen zum Training verwendet werden, in deren Rahmen wiederum die Parameter der Last variiert werden, woraus dann aber die Eingangsparameter des Netzwerks (z.B. die Fourier-Komponenten) z.B. mittels "finite element simulation" numerisch ermittelt werden.

Allgemeiner gesagt, weist die Steuerung 16 der Wägevorrichtung mit Vorteil ein neuronales Netzwerk 32 auf, welchem die mit dem Messorgan ermittelten spektralen Eigenschaften, insbesondere ein Fourier-Spektrum des Signals des Messorgans 14, zugeführt werden, und das trainiert ist, um daraus die Masse des Gegenstands auf der Auflageplatte und allenfalls weitere Parameter dieses Gegenstands zu ermitteln.

Eine derartige Anordnung ist in der Lage, eine grosse Zahl von spektralen Eigenschaften zu verarbeiten und daraus genauere Resultate zu gewinnen.

Mit dem Spektralanalysator können im Rahmen eines Messgangs auch mehrere Spektren ermittelt werden. Dies ist insbesondere dann hilfreich, wenn mit dem Anregungsorgan 12 ein Frequenz-Sweep durchgeführt wird, entweder kontinuierlich oder schrittweise. In diesem Falle können für einzelne Anregungsfrequenzen bzw. -spektren jeweils die Spektren der Schwingung erfasst werden. Diese können sodann z.B. kombiniert werden, z.B. mit einem "Peak-Hold" Algorithmus. Dabei können auch einzelne der Spektren z.B. unberücksichtig bleiben oder unterschiedlich gewichtet werden. Es können auch die einzelnen Spektren direkt ausgewertet werden, z.B. mit den oben erwähnten Mitteln.

*Haptisches oder akustisches Feedback*

Das Anregungsorgan 12, welches mechanische Schwingungen in der Auflageplatte 1 erzeugt, kann nicht nur für den Wägeprozess, sondern auch für andere Anwendungen eingesetzt werden.

Insbesondere kann die Steuerung 16 dazu ausgestaltet sein, das Anregungsorgan 12 als Ausgabemittel zur Kommunikation mit einem Benutzer zu verwenden, insbesondere um einen Zustand der Vorrichtung zu kommunizieren oder auf eine Benutzerhandlung zu reagieren.

Hierzu kann die Steuerung insbesondere mindestens eine der folgenden Kommunikationsarten verwenden:

- Die Steuerung 16 kann das Anregungsorgan 12 zum Erzeugen eines haptischen Feedbacks für den Benutzer ansteuern, z.B. wenn der Benutzer die Auflageplatte 1 berührt. Dies ist insbesondere dann von Vorteil, wenn an der Auflageplatte ein Bedienfeld 18 angeordnet ist (vgl. Fig. 2), z.B. in Form eines oder mehrerer berührungsempfindlicher Bereiche. Um ein haptisches Feedback zu erzeugen, wird das Anregungsorgan 12 mit Vorteil zum Erzeugen eines kurzen mechanischen Pulses von z.B. zwischen 0.05 und 1 Sekunde angesteuert.
- Die Steuerung 16 kann das Anregungsorgan 12 zum Erzeugen eines akustischen Feedbacks für den Benutzer ansteuern. Hierzu wird das Anregungsorgan 12 zum Erzeugen einer hörbaren Schwingung, insbesondere im Frequenzbereich zwischen 100 und 10'000 Hz, angeregt.

Entsprechend ist die Steuerung mit Vorteil dazu ausgestaltet, das Anregungsorgan 12 als Ausgabemittel zur Kommunikation mit einem Benutzer zu verwenden. Insbesondere kann die Steuerung 16 dazu ausgestaltet sein, einen akustischen oder einen haptischen Feedback in der Auflageplatte 1 zu erzeugen.

Im Rahmen des Betriebsverfahrens ist somit mit Vorteil ein Schritt vorgesehen, in welchem das Anregungsorgan zur Kommunikation mit dem Benutzer verwendet wird. Insbesondere kann hierzu mit dem Anregungsorgan 12 in der Auflageplatte 1 ein haptisches und/oder ein akustisches Signal erzeugt werden.

*Anordnung des Anregungs- und Messorgans*

Das Anregungsorgan 12 und das Messorgan 14 können von unten an der Auflageplatte 1 befestigt sein. Damit sind sie vor Beschädigungen von oben geschützt.

Fig. 12 zeigt eine Ausführung, bei welcher Anregungs- und Messorgan 12, 14 z.B. als mindestens eine Geräteeinheit 40 von oben an der Auflageplatte 1 angeordnet sind.

In der dargestellten Ausführung sind Anregungs- und Messorgan 12, 14 als Messgerät 40 ausgestaltet und beispielhaft als ein einzelnes Bauteil dargestellt, und sie sind in einer gemeinsamen Geräteeinheit integriert. Sie können jedoch auch als zwei separate Bauteile ausgeführt sein, in welchem Falle sie in einer oder mehrerer Geräteeinheiten angeordnet sein können.

Die Anordnung von Anregungs- und Messorgan 12, 14 ermöglicht z.B. auch die nachträgliche oder temporäre Positionierung der vorliegenden Messvorrichtung an der Auflageplatte 1.

Insbesondere kann das Messgerät 40 als von der Auflageplatte 1 separate Einheit ausgestaltet sein, welche z.B. bedarfsweise auf die Auflageplatte 1 gesetzt werden kann. Insbesondere kann das Messgerät 40 z.B. ein Smartphone sein, welches über eine Applikation zum Durchführen des hier beschriebenen Verfahrens programmiert ist. In diesem Falle kann z.B. der Lautsprecher und/oder Vibrationsgeber des Smartphones als Anregungsorgan 12 verwendet werden, während das Mikrophon und/oder der Beschleunigungssensor als Messorgan 14 dient. Denkbar ist auch, ein separates Anregungs- und/oder Messorgan 12, 14 zur drahtlosen oder drahtgebundenen Anbindung an ein Smartphone oder ein Tablet bereitzustellen.

*Bemerkungen*

Mit Vorteil erfolgt die Anregung nicht bei allen Frequenzen, sondern nur bei solchen Frequenzen, bei denen man interessante, auswertbare Resonanzen erwartet. Dadurch können z.B. gezielt einzelne Moden angeregt werden.

In den obigen Ausführungen ist ein Kochfeld mit vier Heizelementen 2 dargestellt. Die Zahl der Heizelemente kann jedoch variieren. Insbesondere kann auch ein frei konfigurierbares zweidimensionales Array von Heizelementen vorgesehen sein, in welchem abhängig von der Kochlast geformte Heizzonen aktiviert werden können. Entsprechende Geräte sind dem Fachmann bekannt.

Mit Vorteil besitzt die Auflageplatte 1 rechteckige Form. Denkbar ist jedoch auch z.B. eine runde, elliptische oder polygonale Form.

Die Wägevorrichtung wird, wie oben beschrieben, mit Vorteil in ein Kochfeld integriert. Sie kann jedoch auch in einem beliebigen Möbel 26 angeordnet werden, z.B. an dessen Oberseite als Arbeitsplatte, wie dies in Fig. 9 illustriert ist. Mit Vorteil handelt es sich beim Möbel 26 um ein Küchenmöbel.

Die Auflageplatte 1 ist mit Vorteil aus Glaskeramik, da dieses Material robust ist und/oder auch hohen Temperaturen standhält.

Vorzugsweise besitzt die Auflageplatte in jeder horizontalen Richtung eine Ausdehnung von mindestens 30 cm. Damit ergibt sich grössere Unabhängigkeit vom jeweiligen Durchmesser und der Position üblicher Kochgefässe.

Zum Durchführen von Kalibrierungsmessungen und/oder zum Trainieren des erwähnten neuronalen Netzwerks kann optional zwischen Auflageplatte 1 und dem jeweiligen Referenzobjekt ein Ring mit bekanntem Durchmesser angeordnet werden. Damit kann eine definierte Auflagegrösse erzielt werden.

Bei der Analyse des Signals vom Messorgan 14 können optional gewisse Frequenzbereiche ausgeblendet werden, z.B. wenn es sich im Rahmen der Kalibrierung zeigt, dass diese Frequenzbereiche primär von der Anordnung der Auflageplatte 1 im umgebenden Möbel dominiert werden.

Zur Auswertung kann auch eine Faltung zwischen dem Signal des Anregungsorgans 12 und dem Signal des Messorgans 14 berechnet werden, z.B. mittels Multiplikation im Fourier-Raum. Dadurch können z.B. Oberwellen oder Signale anderer Quellen ausgeblendet werden.

Weiter kann die Auswertung auch mit einem Lock-In Verstärker durchgeführt werden, welcher das Signal des Messorgans 14 mit dem Anregungsorgan filtern und Phase und Amplitude bei der Frequenz des Anregungssignals liefert.

Zur Kalibrierung des Geräts kann auch z.B. ein Normgewicht bekannter Grösse bereitgestellt werden, welches der Benutzer oder Installateur an einer oder mehreren Stellen der Auflageplatte 1 absetzt, worauf die Gerätesteuerung Testmessungen durchführt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

**Patentansprüche**

1. Wägevorrichtung, insbesondere für Küchen, zum Wägen eines Gegenstands mit einer Auflageplatte (1) zum Auflegen des Gegenstands und einer Steuerung (16), umfassend

   - mindestens ein Anregungsorgan (12) zum Erzeugen mechanischer Schwingungen in der Auflageplatte (1) und
   - mindestens ein Messorgan (14) zum Messen der mechanischen Schwingungen,
   wobei die Wägevorrichtung dazu ausgestaltet ist,
   mit dem Anregungsorgan (12) und dem Messorgan (14) mindestens eine spektrale Eigenschaft der Schwingungen zu ermitteln und
   die spektrale Eigenschaft zum Bestimmen einer Masse des Gegenstands zu verwenden
   **dadurch gekennzeichnet, dass** die Steuerung (16) dazu ausgestaltet ist,
   mindestens zwei unterschiedliche spektrale Eigenschaften der Schwingungen zu ermitteln und
   die mindestens zwei spektralen Eigenschaften zum Bestimmen der Masse des Gegenstands zu verwenden.

2. Wägevorrichtung nach Anspruch 1, wobei die spektrale Eigenschaft mindestens eine Resonanzfrequenz der Auflageplatte (1) umfasst, insbesondere mindestens eine Resonanzfrequenz der Auflageplatte (1) ist.

3. Wägevorrichtung nach einem der vorangehenden Ansprüche, wobei die Steuerung (16) dazu ausgestaltet ist,

   die Resonanzfrequenzen mindestens zweier Eigenmoden der Auflageplatte (1) zu ermitteln und
   die Resonanzfrequenzen der mindestens zwei Eigenmoden zum Bestimmen der Masse des Gegenstands zu verwenden,
   und insbesondere wobei die Steuerung (16) dazu ausgestaltet ist,
   die Resonanzfrequenzen mindestens dreier Eigenmoden zu ermitteln und
   die Resonanzfrequenzen der mindestens drei Eigenmoden zum Bestimmen der Masse des Gegenstands zu verwenden.

4. Wägevorrichtung nach Anspruch 3, wobei die gemessenen Resonanzfrequenzen die tiefsten Resonanzfrequenzen der Auflageplatte (1) sind.

5. Wägevorrichtung nach einem der Ansprüche 1 bis 4, wobei die Steuerung (16) dazu ausgestaltet ist, mit mindestens zwei spektralen Eigenschaften mindestens noch einen weiteren unbekannten Parameter des Objekts zu bestimmen oder zu eliminieren, insbesondere dessen Durchmesser und/oder wenigstens einen Ortsparameter des Objekts auf der Auflageplatte (1).

6. Wägevorrichtung nach einem der vorangehenden Ansprüche, wobei die Auflageplatte (1) in jeder Richtung eine Ausdehnung von mindestens 30 cm aufweist und/oder wobei die Auflageplatte (1) aus Glaskeramik ist

7. Wägevorrichtung nach einem der vorangehenden Ansprüche, wobei die Wägevorrichtung dazu ausgestaltet ist, spektrale Eigenschaften, insbesondere die Resonanzfrequenzen, eines gegebenen Satzes von Moden zu bestimmen, und wobei das Anregungsorgan (12) und/oder das Messorgan (14) an einer Stelle der Auflageplatte (1) angeordnet sind, wo die Schwingungsamplituden aller der Moden des Satzes von Moden mindestens 25% einer maximalen Schwingungsamplitude des jeweiligen Modes beträgt.

8. Wägevorrichtung nach einem der vorangehenden Ansprüche, wobei die Auflageplatte (1) rechteckig oder quadratisch ist und wobei das Anregungsorgan (12) und/oder das Messorgan (14) innerhalb einer Toleranz T auf mindestens einer Diagonalen (D) der Auflageplatte (1) angeordnet sind, wobei die Toleranz T höchstens 10% einer kürzeren Seitenlänge (H) der Auflageplatte (1) beträgt, und wobei ein Abstand D1 des Anregungsorgan (12) von einer Mitte der Diagonale (D) und/oder ein Abstand D2 des Messorgans (14) von der Mitte der Diagonale (D) in einem Bereich zwischen 5% und 45%, insbesondere zwischen 25% und 45%, der Länge L der Diagonale (D) liegt bzw. liegen, und insbesondere wobei das Anregungsorgan (12) und das Messorgan (14") auf unterschiedlichen Diagonalen (D) angeordnet sind und wobei zwischen dem Anregungsorgan (12) und dem Messorgan (14") ein Bedienfeld unter der Auflageplatte (1) angeordnet ist.

9. Wägevorrichtung nach einem der vorangehenden Ansprüche, wobei sie mehrere Messorgane (14, 14') an unterschiedlichen Positionen aufweist, und insbesondere wobei die Steuerung (16) dazu ausgestaltet ist, insbesondere zusätzlich zu einer Resonanzfrequenz, ein Amplitudenverhältnis und/oder eine Phasenverschiebung zwischen Signalen der Messorgane (14, 14') bei der Resonanzfrequenz zu bestimmen.

10. Wägevorrichtung nach einem der vorangehenden Ansprüche mit einem Geräterahmen (4), der auf einer Unterseite der Auflageplatte (1) allseitig beabstandet von einem Aussenrand (5) der Auflageplatte (1) befestigt ist,

   insbesondere wobei der Geräterahmen (4) auf jeder Längsseite an mehreren Punkten mit der Auflageplatte (1) verbunden ist, und/oder
   insbesondere wobei der Geräterahmen einen Durchmesser von mindestens 80% aber höchstens 98% der Auflageplatte (1) aufweist.

11. Wägevorrichtung nach einem der vorangehenden Ansprüche, wobei eine Steuerung (16) der Wägevorrichtung dazu ausgestaltet ist, mindestens einen Kalibrierparameter (L) bei bekannter Last, insbesondere in einem lastfreien Zustand der Auflageplatte (1), zu bestimmen.

12. Wägevorrichtung nach einem der vorangehenden Ansprüche, wobei eine Steuerung (16) der Wägevorrichtung dazu ausgestaltet ist, Brutto- und Taramessungen an demselben Behälter durchzuführen, und

   insbesondere wobei die Steuerung (16) dazu ausgestaltet sein, nach der Taramessung anzuzeigen, dass der Behälter zum Durchführen der Bruttomessung gefüllt werden muss, oder ein Bedienfeld (18) vorgesehen ist um anzugeben, ob eine Messung eine Tara- oder Bruttomessung ist, und/oder
   insbesondere wobei die Steuerung (16) dazu ausgestaltet ist anzunehmen, dass sich eine Position (x, y) und ein Durchmesser (d) des Behälters zwischen der Taramessung und der Bruttomessung nicht ändert.

13. Wägevorrichtung nach einem der vorangehenden Ansprüche mit einer Positionierhilfe (22) zum Positionieren des Gegenstands auf der Auflageplatte (1), und insbesondere wobei die Positionierhilfe (22) in einem Zentrum der Auflageplatte (1) angeordnet ist.

14. Wägevorrichtung nach Anspruch 13, wobei die Positionierhilfe (22) einen erhabenen Bereich (24) auf der Auflageplatte (1) bildet,
   insbesondere wobei ein Durchmesser (d) des erhabenen Bereichs mindestens 5 cm und/oder nicht mehr als 15 cm beträgt, insbesondere nicht mehr als 10 cm.

15. Wägevorrichtung nach einem der vorangehenden Ansprüche, wobei die Auflageplatte (1) einen versteiften Bereich (25a) aufweist, wobei eine Steifigkeit der Auflageplatte (1) innerhalb des versteiften Bereichs (25a) grösser ist als ausserhalb,
   und insbesondere wobei der versteifte Bereich (25a) einen Durchmesser von mindestens 10 cm, insbesondere von mindestens 20 cm, besitzt und/oder wobei eine Mitte der Auflageplatte (1) im versteiften Bereich (25a) angeordnet ist.

16. Wägevorrichtung nach einem der vorangehenden Ansprüche, wobei die Auflageplatte (1) einen verdünnten Bereich (25c) aufweist, welcher sich um einen Sollauflagebereich für den Gegenstand erstreckt,
   und insbesondere wobei der verdünnte Bereich (25c) einen Innendurchmesser von mindestens 10 cm, insbesondere von mindestens 20 cm, besitzt und/oder wobei der verdünnte Bereich (25c) sich um eine Mitte der Auflageplatte (1) erstreckt.

17. Wägevorrichtung nach einem der vorangehenden Ansprüche, wobei die Steuerung (16) ein neuronales Netzwerk (32) aufweist, welchem spektrale Eigenschaften, insbesondere ein Fourier-Spektrum des Signals des Messorgans (14), zugeführt werden, und das trainiert ist, um daraus zumindest die Masse des Gegenstands auf der Auflageplatte (1) zu ermitteln.

18. Wägevorrichtung nach einem der vorangehenden Ansprüche, wobei die Steuerung (16) dazu ausgestaltet ist, das Anregungsorgan (12) als Ausgabemittel zur Kommunikation mit einem Benutzer zu verwenden, und insbesondere wobei die Steuerung (16) dazu ausgestaltet ist, einen akustischen oder haptischen Feedback in der Auflageplatte (1) zu erzeugen.

19. Kochfeld mit einer Wägevorrichtung nach einem der vorangehenden Ansprüche, wobei das Kochfeld mehrere Heizelemente (2) aufweist, welche unter der Auflageplatte (1) angeordnet sind, derart, dass die Auflageplatte (1) eine Kochfläche des Kochfelds bildet.

**20.** Möbel, insbesondere Küchenmöbel, mit einer Wägevorrichtung nach einem der Ansprüche 1 bis 18.

**21.** Verfahren zum Betrieb der Wägevorrichtung nach einem der Ansprüche 1 bis 18 umfassend zumindest die folgenden Schritte:

- Erzeugen mechanischer Schwingungen in der Auflageplatte (1) mit dem Anregungsorgan (12),
- Messen mindestens einer spektralen Eigenschaft der Schwingungen mit dem Messorgan (14) und
- Verwenden der mindestens einen spektralen Eigenschaft der Schwingungen zum Bestimmen einer Masse des Gegenstands auf der Auflageplatte (1).

**22.** Verfahren nach Anspruch 21, welches weiter den folgenden Schritt umfasst:

- Verwendung des Anregungsorgans (12) zur Kommunikation mit dem Benutzer.

**23.** Verfahren nach Anspruch 22, wobei zur Kommunikation mit dem Benutzer mit dem Anregungsorgan (12) in der Auflageplatte (1) ein haptisches und/oder ein akustisches Signal erzeugt wird.

**24.** Messgerät (40) für die Wägevorrichtung, das Kochfeld, Möbel oder Verfahren nach einem der vorangehenden Ansprüche, geeignet zur Anordnung an einer Auflageplatte (1), umfassend

- mindestens ein Anregungsorgan (12) zum Erzeugen mechanischer Schwingungen in der Auflageplatte (1) und
- mindestens ein Messorgan (14) zum Messen der mechanischen Schwingungen,
wobei das Messgerät (40) dazu ausgestaltet ist,
mit dem Anregungsorgan (12) und dem Messorgan (14) mindestens eine spektrale Eigenschaft der Schwingungen zu ermitteln und
die spektrale Eigenschaft zum Bestimmen einer Masse des Gegenstands zu verwenden,
**dadurch gekennzeichnet, dass** das Messgerät (40) dazu ausgestaltet ist,
mindestens zwei unterschiedliche spektrale Eigenschaften der Schwingungen zu ermitteln und
die mindestens zwei spektralen Eigenschaften zum Bestimmen der Masse des Gegenstands zu verwenden.

**Claims**

**1.** Weighing device, in particular for kitchens, for weighing an object with a support plate (1) for supporting the object and a controller (16), comprising

- at least one excitation element (12) for generating mechanical vibrations in the support plate (1) and
- at least one measuring element (14) for measuring the mechanical vibrations,
wherein the weighing device is adapted
to determine at least one spectral property of the vibrations using the excitation element (12) and the measuring element (14), and
to use the spectral property to determine a mass of the object
**characterized in that** the controller (16) is adapted
to determine at least two different spectral characteristics of the vibrations and
to use the at least two spectral characteristics to determine the mass of the object.

**2.** Weighing device according to claim 1,
wherein the spectral property comprises at least one resonant frequency of the support plate (1), in particular is at least one resonant frequency of the support plate (1).

**3.** Weighing device according to one of the preceding claims, wherein the controller (16) is adapted

to determine the resonant frequencies of at least two eigenmodes of the support plate (1), and
using the resonant frequencies of the at least two eigenmodes to determine the mass of the object,
and in particular wherein the controller (16) is adapted

to determine the resonant frequencies of at least three eigenmodes and
using the resonant frequencies of the at least three eigenmodes to determine the mass of the object.

**4.** Weighing device according to claim 3,
wherein the measured resonant frequencies are the lowest resonant frequencies of the support plate (1).

**5.** Weighing device according to one of claims 1 to 4, wherein the controller (16) is adapted to determine or eliminate at least one further unknown parameter of the object with at least two spectral characteristics, in particular its diameter and/or at least one location parameter of the object on the support plate (1).

**6.** Weighing device according to one of the preceding claims, wherein the support plate (1) has an extension of at least 30 cm in each direction and/or wherein the support plate (1) is made of glass ceramic.

**7.** Weighing device according to one of the preceding claims, wherein the weighing device is adapted to determine spectral characteristics, in particular the resonant frequencies, of a given set of modes, and wherein the excitation element (12) and/or the measuring element (14) are arranged at a position of the support plate (1) where the oscillation amplitudes of all the modes of the set of modes are at least 25% of a maximum oscillation amplitude of the respective mode.

**8.** Weighing device according to one of the preceding claims, wherein the support plate (1) is rectangular or square and wherein the excitation element (12) and/or the measuring element (14) is/are arranged, within a tolerance T, on at least one diagonal (D) of the support plate (1), wherein the tolerance T is at most 10% of a shorter side length (H) of the support plate (1), and a distance D1 of the excitation element (12) from a center of the diagonal (D) and/or a distance D2 of the measuring element (14) from the center of the diagonal (D) lies/lie in a range between 5% and 45%, in particular between 25% and 45%, of the length L of the diagonal (D),
and in particular wherein the excitation element (12) and the measuring element (14") are arranged on different diagonals (D) and wherein a control panel is arranged under the support plate (1) between the excitation element (12) and the measuring element (14").

**9.** Weighing device according to one of the preceding claims, wherein it has a plurality of measuring elements (14, 14') at different positions, and in particular wherein the controller (16) is adapted to determine, in particular in addition to a resonant frequency, an amplitude ratio and/or a phase shift between signals of the measuring elements (14, 14') at the resonant frequency.

**10.** Weighing device according to one of the preceding claims, having a device frame (4) that is affixed to a bottom of the support plate (1) and spaced on all sides from an outer edge (5) of the support plate (1),

in particular wherein the device frame (4) is connected to the support plate (1) at several points on each longitudinal side, and/or
in particular wherein the device frame has a diameter of at least 80% but at most 98% of the support plate (1).

**11.** Weighing device according to one of the preceding claims, wherein a controller (16) of the weighing device is adapted to determine at least one calibration parameter (L) at a known load, in particular in a load-free state of the support plate (1).

**12.** Weighing device according to one of the preceding claims, wherein a controller (16) of the weighing device is adapted to perform gross and tare measurements on the same container, and

in particular wherein the controller (16) is adapted to indicate after the tare measurement that the container must be filled to perform the gross measurement, or a control panel (18) is provided to indicate whether a measurement is a tare or gross measurement, and/or
in particular wherein the controller (16) is adapted to assume that a position (x, y) and a diameter (d) of the container do not change between the tare measurement and the gross measurement.

**13.** Weighing device according to one of the preceding claims, with a positioning aid (22) for positioning the object on the support plate (1), and in particular wherein the positioning aid (22) is arranged in a center of the support plate (1).

**14.** Weighing device according to claim 13,

wherein the positioning aid (22) forms a raised area (24) on the support plate (1),
in particular wherein a diameter (d) of the raised area is at least 5 cm and/or not more than 15 cm, in particular not more than 10 cm.

15. Weighing device according to one of the preceding claims, wherein the support plate (1) has a stiffened region (25a), wherein a stiffness of the support plate (1) is greater inside the stiffened region (25a) than outside it, and in particular wherein the stiffened region (25a) has a diameter of at least 10 cm, in particular of at least 20 cm, and/or wherein a center of the support plate (1) is arranged in the stiffened region (25a) .

16. Weighing device according to one of the preceding claims, wherein the support plate (1) has a thinned area (25c) which extends around a target support region for the article, and in particular wherein the thinned area (25c) has an inner diameter of at least 10 cm, in particular of at least 20 cm, and/or wherein the thinned area (25c) extends around a center of the support plate (1) .

17. Weighing device according to one of the preceding claims, wherein the controller (16) has a neural network (32) to which spectral characteristics, in particular a Fourier spectrum of the signal of the measuring element (14), are fed, and which is trained to determine therefrom at least the mass of the object on the support plate (1).

18. Weighing device according to one of the preceding claims, wherein the controller (16) is adapted to use the excitation element (12) as an output means for communicating with a user, and in particular wherein the controller (16) is adapted to generate an acoustic or haptic feedback in the support plate (1).

19. Cooktop with a weighing device according to one of the preceding claims, wherein the cooktop has a plurality of heating elements (2) which are arranged under the support plate (1) in such a way that the support plate (1) forms a cooking surface of the cooktop.

20. Piece of furniture, in particular kitchen furniture, with a weighing device according to one of claims 1 to 18.

21. Method for operating the weighing device according to one of claims 1 to 18, comprising at least the following steps:

- generating mechanical vibrations in the support plate (1) with the excitation element (12),
- measuring at least one spectral property of the vibrations with the measuring element (14), and
- using the at least one spectral property of the vibrations to determine a mass of the object on the support plate (1).

22. Method according to claim 21, further comprising the following step:

- using the excitation element (12) to communicate with the user.

23. Method according to claim 22, wherein a haptic and/or an acoustic signal is generated in the support plate (1) for communication with the user with the excitation element (12).

24. Measuring device (40) for the weighing device, the cooktop, the piece of furniture or method according to one of the preceding claims, suitable for being mounted on a support plate (1), comprising

- at least one excitation element (12) for generating mechanical vibrations in the support plate (1), and
- at least one measuring element (14) for measuring the mechanical vibrations,
wherein the measuring device (40) is adapted
to determine at least one spectral property of the vibrations with the excitation element (12) and the measuring element (14), and
using the spectral property to determine a mass of the object,
**characterized in that** the measuring device (40) is adapted
to determine at least two different spectral characteristics of the vibrations and
to use the at least two spectral characteristics to determine the mass of the object.

**Revendications**

1. Dispositif de pesage, en particulier pour des cuisines, pour peser un objet avec une plaque de support (1) pour poser l'objet et une commande (16), comprenant

- au moins un organe d'excitation (12) pour générer des oscillations mécaniques dans la plaque de support (1) et
- au moins un organe de mesure (14) pour mesurer les oscillations mécaniques,
le dispositif de pesage étant conçu pour
déterminer avec l'organe d'excitation (12) et l'organe de mesure (14) au moins une propriété spectrale des oscillations et
utiliser la propriété spectrale pour déterminer une masse de l'objet
**caractérisé en ce que** la commande (16) est conçue pour,
déterminer au moins deux propriétés spectrales différentes des oscillations et
utiliser les au moins deux propriétés spectrales pour déterminer la masse de l'objet.

2. Dispositif de pesage selon la revendication 1, dans lequel la propriété spectrale comprend au moins une fréquence de résonance de la plaque de support (1), en particulier est au moins une fréquence de résonance de la plaque de support (1).

3. Dispositif de pesage selon l'une des revendications précédentes, dans lequel la commande (16) est conçue pour,

déterminer les fréquences de résonance d'au moins deux modes propres de la plaque de support (1) et
utiliser les fréquences de résonance des au moins deux modes propres pour déterminer la masse de l'objet,
et en particulier la commande (16) étant conçue pour, déterminer les fréquences de résonance d'au moins trois modes propres et
utiliser les fréquences de résonance des au moins trois modes propres pour déterminer la masse de l'objet.

4. Dispositif de pesage selon la revendication 3, dans lequel les fréquences de résonance mesurées sont les fréquences de résonance les plus basses de la plaque de support (1).

5. Dispositif de pesage selon l'une des revendications 1 à 4, dans lequel la commande (16) est configurée pour déterminer ou éliminer, avec au moins deux propriétés spectrales, au moins un autre paramètre inconnu de l'objet, particulièrement son diamètre et/ou au moins un paramètre de position de l'objet sur la plaque de support (1).

6. Dispositif de pesage selon l'une des revendications précédentes, dans lequel la plaque de support (1) présente dans chaque direction une extension d'au moins 30 cm et/ou dans lequel la plaque de support (1) est en vitrocéramique.

7. Dispositif de pesage selon l'une des revendications précédentes, dans lequel le dispositif de pesage est configuré pour déterminer les propriétés spectrales, particulièrement les fréquences de résonance, d'un ensemble donné de modes, et dans lequel l'organe d'excitation (12) et/ou l'organe de mesure (14) sont disposés à un endroit de la plaque de support (1) où les amplitudes d'oscillation de tous les modes de l'ensemble de modes représentent au moins 25% d'une amplitude d'oscillation maximale du mode considéré.

8. Dispositif de pesage selon l'une des revendications précédentes, dans lequel la plaque de support (1) est rectangulaire ou carré et dans lequel l'organe d'excitation (12) et/ou l'organe de mesure (14) sont disposés avec une tolérance T sur au moins une diagonale (D) de la plaque de support (1), la tolérance T étant au maximum de 10% d'une longueur de côté (H) plus courte de la plaque de support (1), et une distance D1 de l'organe d'excitation (12) par rapport à un centre de la diagonale (D) et/ou une distance D2 de l'organe de mesure (14) par rapport au centre de la diagonale (D) se situant dans une plage comprise entre 5% et 45%, en particulier entre 25% et 45%, de la longueur L de la diagonale (D),
et en particulier l'organe d'excitation (12) et l'organe de mesure (14") étant disposés sur des diagonales (D) différentes et un panneau de commande étant disposé entre l'organe d'excitation (12) et l'organe de mesure (14") sous la plaque de support (1).

9. Dispositif de pesage selon l'une des revendications précédentes, dans lequel il comprend plusieurs organes de mesure (14, 14') à différentes positions, et en particulier dans lequel la commande (16) est configurée pour déterminer, en particulier en plus d'une fréquence de résonance, un rapport d'amplitude et/ou un déphasage entre des signaux des organes de mesure (14, 14') à la fréquence de résonance.

10. Dispositif de pesage selon l'une des revendications précédentes, comprenant un cadre d'appareil (4) fixé sur une face inférieure de la plaque de support (1), à distance de tous côtés d'un bord extérieur (5) de la plaque de support (1),

en particulier le cadre de l'appareil (4) étant relié à la plaque de support (1) en plusieurs points sur chaque côté longitudinal, et/ou

en particulier, le cadre de l'appareil présentant un diamètre d'au moins 80% mais d'au plus 98% de la plaque de support (1).

11. Dispositif de pesage selon l'une des revendications précédentes, dans lequel une commande (16) du dispositif de pesage est conçue pour déterminer au moins un paramètre d'étalonnage (L) pour une charge connue, en particulier dans un état sans charge de la plaque de support (1).

12. Dispositif de pesage selon l'une des revendications précédentes, dans lequel une commande (16) du dispositif de pesage est configurée pour effectuer des mesures de poids brut et de tare sur le même récipient, en particulier, la commande (16) étant conçue pour indiquer, après la mesure de tare, que le récipient doit être rempli pour effectuer la mesure de poids brut, ou un panneau de commande (18) étant prévu pour indiquer si une mesure est une mesure de tare ou une mesure de poids brut, et/ou

en particulier, la commande (16) étant conçue pour présumer qu'une position (x, y) et un diamètre (d) du récipient ne changent pas entre la mesure de tare et la mesure de poids brut.

13. Dispositif de pesage selon l'une des revendications précédentes, avec une aide de positionnement (22) pour positionner l'objet sur la plaque de support (1), et notamment dans lequel l'aide de positionnement (22) est disposée au centre de la plaque de support (1).

14. Dispositif de pesage selon la revendication 13, dans lequel l'aide de positionnement (22) forme une zone en relief (24) sur la plaque de support (1),
en particulier dans lequel un diamètre (d) de la zone en relief est d'au moins 5 cm et/ou n'est pas supérieur à 15 cm, en particulier n'est pas supérieur à 10 cm.

15. Dispositif de pesage selon l'une des revendications précédentes, dans lequel la plaque de support (1) comporte une zone rigidifiée (25a), une raideur du plaque (1) étant plus importante à l'intérieur de la zone rigidifiée (25a) qu'à l'extérieur,
et en particulier dans lequel la zone rigidifiée (25a) possède un diamètre d'au moins 10 cm, en particulier d'au moins 20 cm, et/ou dans lequel un centre de la plaque de support (1) est disposé dans la zone rigidifiée (25a).

16. Dispositif de pesage selon l'une des revendications précédentes, dans lequel la plaque de support (1) présente une zone amincie (25c) s'étendant autour d'une zone de support de consigne pour l'objet,
et notamment dans lequel la zone amincie (25c) possède un diamètre intérieur d'au moins 10 cm, notamment d'au moins 20 cm, et/ou dans lequel la zone amincie (25c) s'étend autour d'un centre de la plaque de support (1) .

17. Dispositif de pesage selon l'une des revendications précédentes, dans lequel la commande (16) comporte un réseau neuronal (32) auquel sont transmises des propriétés spectrales, notamment un spectre de Fourier du signal de l'organe de mesure (14), et qui est entraîné pour en déduire au moins la masse de l'objet sur la plaque de support (1).

18. Dispositif de pesage selon l'une des revendications précédentes, dans lequel la commande (16) est configurée pour utiliser l'organe d'excitation (12) comme moyen de sortie pour communiquer avec un utilisateur, et en particulier dans lequel la commande (16) est configurée pour générer un retour acoustique ou haptique dans la plaque de support (1).

19. Table de cuisson avec un dispositif de pesage selon l'une des revendications précédentes, la table de cuisson comportant plusieurs éléments chauffants (2) disposés sous la plaque de support (1) de telle sorte que la plaque de support (1) forme une surface de cuisson de la table de cuisson.

20. Meuble, en particulier meuble de cuisine, avec un dispositif de pesage selon l'une des revendications 1 à 18.

21. Procédé de mise en œuvre du dispositif de pesage selon l'une des revendications 1 à 18 comprenant au moins les étapes suivantes :

- générer des vibrations mécaniques dans la plaque de support (1) à l'aide de l'organe d'excitation (12),

- mesurer au moins une propriété spectrale des oscillations avec l'organe de mesure (14) et
- utiliser au moins une propriété spectrale des oscillations pour déterminer une masse de l'objet sur la plaque de support (1).

22. Procédé selon la revendication 21, comprenant en outre l'étape suivante :

- utiliser l'organe d'excitation (12) pour communiquer avec l'utilisateur.

23. Procédé selon la revendication 22, dans lequel, pour communiquer avec l'utilisateur, un signal haptique et/ou un signal acoustique est généré avec l'organe d'excitation (12) dans la plaque de support (1).

24. Appareil de mesure (40) pour le dispositif de pesage, la table de cuisson, le meuble ou le procédé selon l'une des revendications précédentes, adapté pour être disposé sur une plaque de support (1), comprenant

- au moins un organe d'excitation (12) pour générer des oscillations mécaniques dans la plaque de support (1) et
- au moins un organe de mesure (14) pour mesurer les oscillations mécaniques,
l'appareil de mesure (40) étant conçu pour,
déterminer avec l'organe d'excitation (12) et l'organe de mesure (14) au moins une propriété spectrale des oscillations et
utiliser la propriété spectrale pour déterminer une masse de l'objet,
**caractérisé en ce que** l'appareil de mesure (40) est conçu pour,
déterminer au moins deux propriétés spectrales différentes des oscillations et
utiliser les au moins deux propriétés spectrales pour déterminer la masse de l'objet.

Fig. 1

Fig. 2

Fig. 3

Fig. 4

Fig. 6

**Fig. 7**

**Fig. 8**

**Fig. 9**

alle
Moden

A1

Moden 2,4

Mode 6  A7

A8

Mode 6

alle
Moden

Mode 5

Moden
3, 4

Mode 5

A4

1

A3

alle
Moden

A2  A5

A6

**Fig. 10**

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0226002 A
- DE 102014111193 A1